# FASCICULE DE BREVET EUROPEEN

(11) **EP 2 127 918 B1**
(45) Date de publication et mention de la délivrance du brevet: **19.01.2011**
(21) Numéro de dépôt: 09160472.8
(22) Date de dépôt: 18.05.2009
(51) Int. Cl.: B60G 3/01, B60G 17/015, B60K 7/00

(54) **Véhicule à entrainement électrique et à deux essieux**
Fahrzeug mit elektrischem Antrieb und zwei Achsen
Electrically powered vehicle with two axles

(30) Priorité: 20.05.2008 FR 0853268
(43) Date de publication de la demande: 02.12.2009
(73) Titulaire: Société de Technologie Michelin, 63000 Clermont-Ferrand (FR); MICHELIN Recherche et Technique S.A., 1763 Granges-Paccot (CH)
(72) Inventeur: Sebe, Marc, 1740, NEYRUZ (CH)
(74) Mandataire: Lasson, Cédric Y. M.

(56) Documents cités:
- EP-A- 0 878 332
- WO-A-2007/020498
- WO-A-2007/042870
- FR-A- 2 898 833
- US-A1- 2003 205 879

## Description

L'invention concerne, de façon générale, la conception des véhicules terrestres.

Plus précisément, l'invention concerne un véhicule comprenant au moins un essieu avant et un essieu arrière, un premier au moins de ces essieux étant équipé, de chaque côté du véhicule, d'un porte-roue, d'une roue portée à rotation autour de son axe par le porte-roue, d'une coulisse fixée au porte-roue, constituée d'un barreau unique, et disposée suivant une direction sensiblement verticale, d'une glissière montée coulissante le long de la coulisse, d'un élément suspendu du véhicule, lié à la glissière au moins en translation le long de la coulisse, de moyens électriques d'entraînement portés par le porte-roue et entraînant sélectivement la roue en rotation autour de son axe, et de moyens de suspension contrôlant le coulissement de l'élément suspendu le long de la coulisse.

Un véhicule de ce type est notamment connu du brevet EP 0 878 332, et au moins partiellement décrit dans les documents de brevets EP 1 000 779, WO 2006/032669, WO 2007/006776, WO 2007/107570, et US 2003/205879.

Bien que les techniques illustrées dans ces documents et développées pour entraîner les roues de façon individuelle par énergie électrique offrent de nouvelles perspectives en matière de conception de véhicule, le report vers les roues des organes d'entraînement et de suspension pose des problèmes aigus d'encombrement qui rendent notamment difficile la réalisation d'un véhicule utilitaire, ou qui conduisent à en limiter le volume utile.

L'invention, qui se situe dans ce contexte, a pour but de proposer une architecture permettant de surmonter ces difficultés.

A cette fin, le véhicule de l'invention, par ailleurs conforme à la définition générique qu'en donne le préambule ci-dessus, est essentiellement **caractérisé en ce que** le premier essieu est un essieu arrière, en ce que ce véhicule comprend un deuxième essieu arrière, identique au premier, et en ce que le barreau de chaque porte-roue de chaque essieu arrière présente une section en forme de "I", allongée suivant une direction sensiblement parallèle au plan médian de la roue correspondante.

Chaque essieu arrière peut ainsi notamment être équipé de roues de largeur inférieure à celle des roues équipant l'essieu avant.

En outre, le plan médian de chaque roue de chaque essieu arrière peut occuper une position décalée vers l'extérieur du véhicule par rapport à la position occupée par le barreau du porte-roue portant cette roue et ainsi libérer un espace permettant d'augmenter le volume utile du véhicule.

Les moyens de suspension comprennent par exemple, au moins pour chaque roue de chaque essieu arrière, des moyens de suspension d'un premier type incluant une machine électrique de suspension liée à l'élément suspendu et associée à un réducteur à deux étages de réduction.

Pour chaque roue de chacun des essieux avant et arrière, ces moyens de suspension comprennent par exemple des moyens de suspension d'un premier type incluant une machine électrique de suspension associée à un réducteur à deux étages de réduction et liée à la glissière correspondant à cette roue.

Pour chaque roue de chaque essieu arrière, ces moyens de suspension du premier type peuvent inclure une machine électrique de suspension disposée dans une traverse de cet essieu.

Les moyens électriques d'entraînement de chaque roue de chaque essieu arrière peuvent, quant à eux, comprendre deux moteurs disposés symétriquement de part et d'autre du barreau.

Les moyens de suspension de chaque roue peuvent aussi comprendre au moins un organe de suspension d'un deuxième type, porté par le porte-roue et propre à appliquer entre le porte-roue et l'élément suspendu une force dépendant de la position de coulissement de l'élément suspendu sur le barreau.

En particulier, les moyens de suspension de chaque roue de chaque essieu arrière peuvent comprendre deux organes de suspension du deuxième type disposés symétriquement de part et d'autre du barreau.

Chacun de ces organes de suspension du deuxième type peut lui-même comprendre un ressort spiral dont une extrémité est reliée à l'élément suspendu, par exemple au moyen d'une courroie ou d'une chaîne.

Dans un mode de réalisation possible de l'invention, les moyens électriques d'entraînement de chaque roue de l'essieu avant comprennent deux moteurs dont chacun est associé à un réducteur à deux étages de réduction.

Par ailleurs, les moyens électriques d'entraînement de chaque roue de l'un au moins des essieux comprennent avantageusement un résolveur unique et autonome.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue schématique en perspective d'un véhicule mettant en oeuvre l'invention;
- la figure 2 est une vue schématique en perspective partielle et écorchée d'un premier mode de réalisation possible d'une structure de roue avant susceptible d'être utilisée, de façon non limitative, sur un véhicule tel qu'illustré à la figure 1;
- la figure 3 est une vue schématique en perspective partielle de la structure de roue illustrée à la figure 2, observée sur son côté interne au véhicule;
- la figure 4 est une vue en coupe partielle, suivant un plan axial horizontal, de la structure de roue avant illustrée aux figures 2 et 3;
- la figure 5 est une vue en élévation de la structure de roue avant illustrée à la figure 4, observée sur son côté interne au véhicule;
- la figure 6 est une vue en coupe partielle, suivant un plan axial horizontal, d'un deuxième mode de réalisation possible d'une structure de roue avant susceptible d'être utilisée, de façon non limitative, sur un véhicule tel qu'illustré à la figure 1;
- la figure 7 est une vue en élévation de la structure de roue avant illustrée à la figure 6, observée sur son côté interne au véhicule;
- la figure 8 est une vue en coupe partielle, suivant un plan axial horizontal, d'un premier mode de réalisation possible d'une structure de roue arrière susceptible d'être utilisée, de façon non limitative, sur un véhicule tel qu'illustré à la figure 1;
- la figure 9 est une vue en élévation de la structure de roue arrière illustrée à la figure 8, observée sur son côté interne au véhicule;
- la figure 10 est une vue en coupe partielle, suivant un plan axial horizontal, d'une variante de la structure de roue arrière illustrée aux figures 8 et 9;
- la figure 11 est une vue en élévation de la structure de roue arrière illustrée à la figure 10, observée sur son côté interne au véhicule;
- la figure 12 est une vue en coupe partielle, suivant un plan axial horizontal, d'un deuxième mode de réalisation possible d'une structure de roue arrière susceptible d'être utilisée, de façon non limitative, sur un véhicule tel qu'illustré à la figure 1; et
- la figure 13 est une vue en élévation de la structure de roue arrière illustrée à la figure 12, observée sur son côté interne au véhicule.

Comme annoncé précédemment, l'invention concerne la conception de véhicules terrestres, en particulier considérés du point de vue de ce que l'homme du métier dénomme la "liaison au sol", c'est-à-dire l'ensemble des organes du véhicule qui assurent notamment, au moins au niveau d'un essieu, la fonction de roulement de ce véhicule, et de façon plus générale également ses fonctions d'entraînement, de freinage et de suspension.

Plus précisément, l'invention concerne la conception de véhicules terrestres dont au moins une liaison au sol est dotée d'une fonction d'entraînement électrique localisée au niveau de la roue.

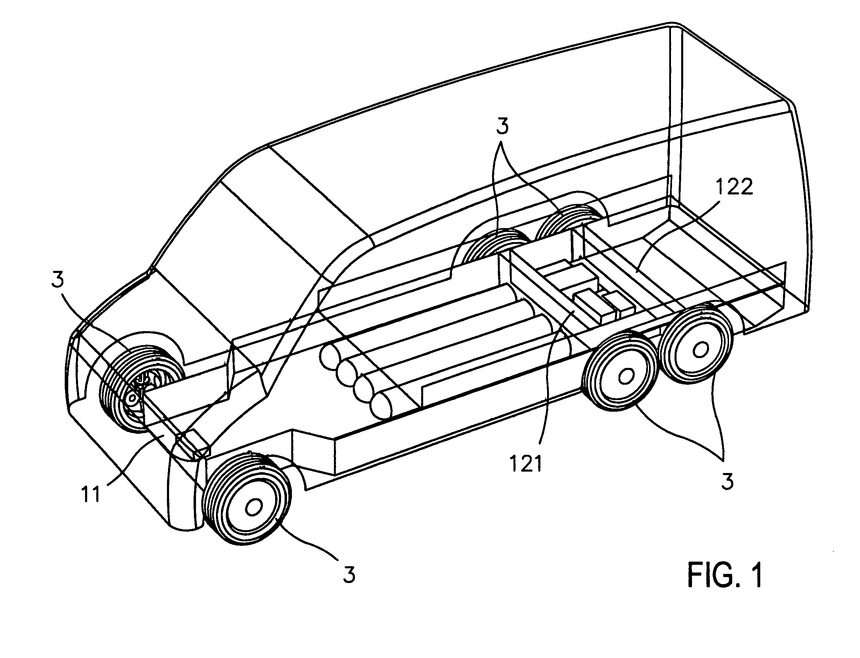

La figure 1 illustre un véhicule du type concerné par l'invention.

Un tel véhicule comprend un essieu avant 11 et au moins un essieu arrière 121, ce véhicule comprenant en l'occurrence un deuxième essieu arrière 122, identique au premier essieu arrière 121.

L'un au moins de ces essieux avant et arrière, et en l'occurrence chacun d'eux dans les différents modes de réalisation illustrés, est équipé, de chaque côté du véhicule, d'un porte-roue 2, d'une roue 3, d'une coulisse telle que 4a à l'avant et 4b à l'arrière, d'une glissière 5, d'un élément suspendu 6 du véhicule, et de moyens de suspension 8.

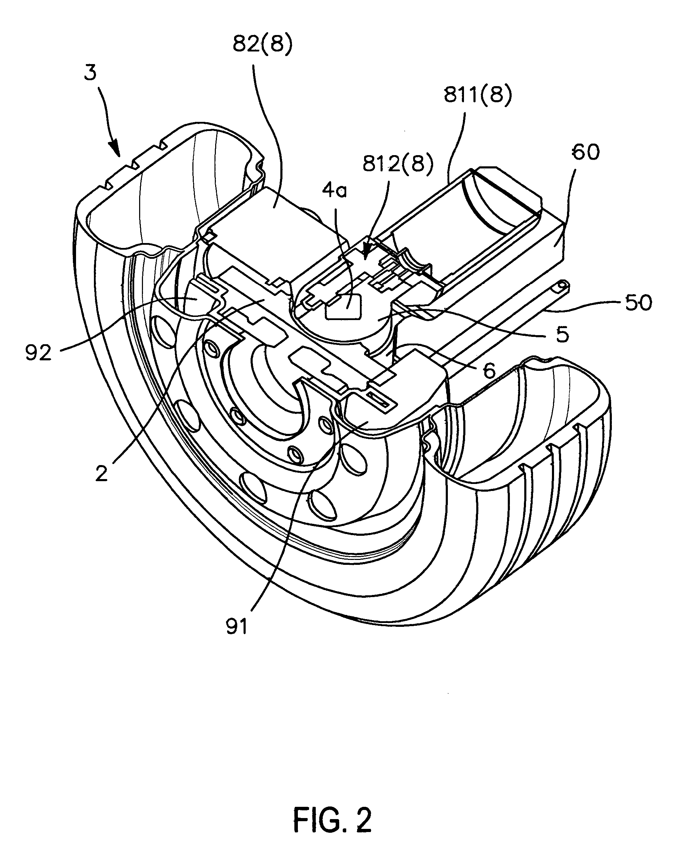

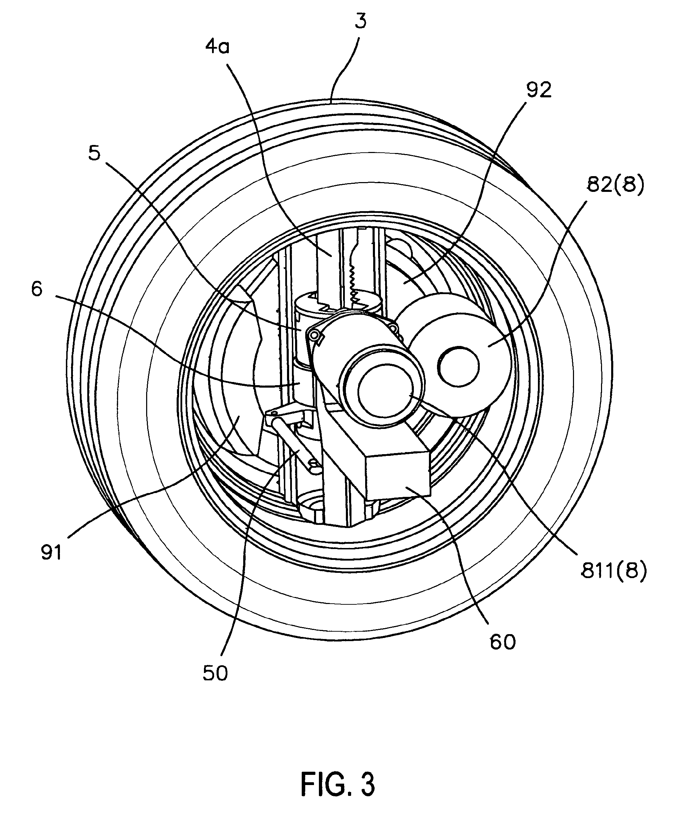

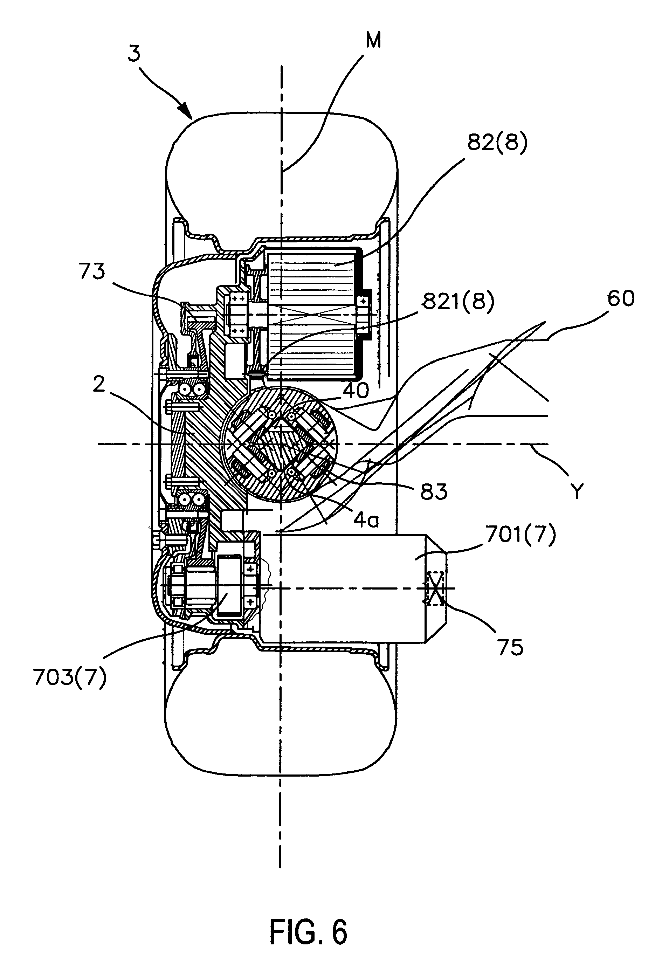

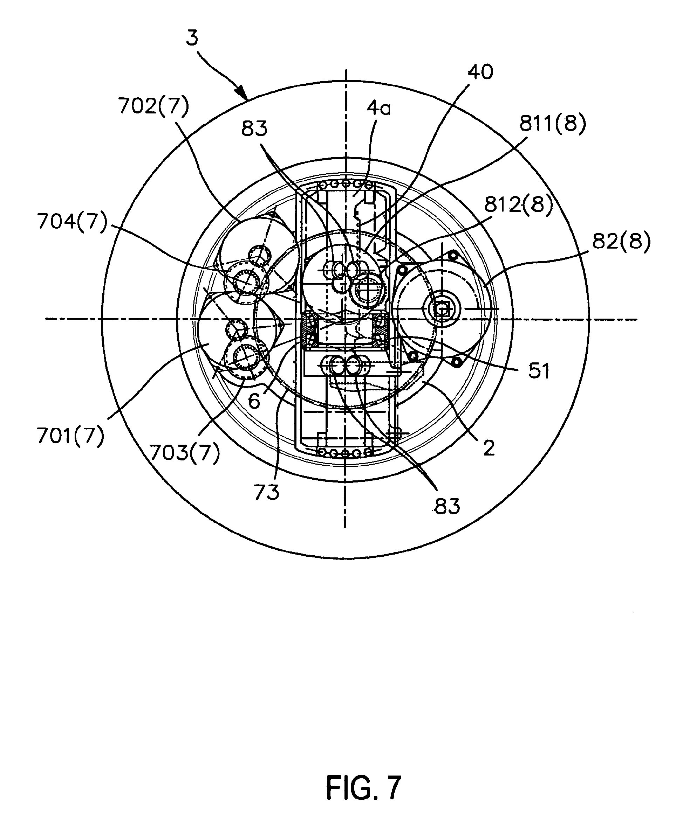

Des moyens électriques d'entraînement 7 sont également prévus pour chaque roue 3 de l'un au moins des essieux, et notamment des essieux arrière 121 et 122, les roues de l'essieu avant 11 pouvant elles-mêmes être motrices (figures 6 et 7) ou non (figures 2 à 5).

Chaque roue 3 est portée à rotation autour de son axe Y par le porte-roue 2, et chaque roue motrice est entraînée en rotation autour de son axe Y par des moyens électriques d'entraînement 7 qui lui sont dédiés et qui sont eux-mêmes portés par le porte-roue 2 associé à cette roue 3.

La coulisse 4a ou 4b associée à chaque roue est également fixée au porte-roue 2 et disposée suivant une direction sensiblement verticale.

Selon un aspect de l'invention, chaque coulisse 4a ou 4b est constituée d'un barreau unique.

Chaque glissière 5 est montée coulissante le long de la coulisse 4a ou 4b correspondante, c'est-à-dire suivant la direction sensiblement verticale, au moyen de galets de suspension 83.

L'élément suspendu 6, qui est typiquement constitué par l'extrémité d'une traverse 60 du véhicule, est lié, au moins en translation le long de la coulisse associée 4a ou 4b, à la glissière 5 correspondante.

Plus précisément, l'élément suspendu 6 est rigidement lié à la glissière 5 correspondante pour chaque roue arrière.

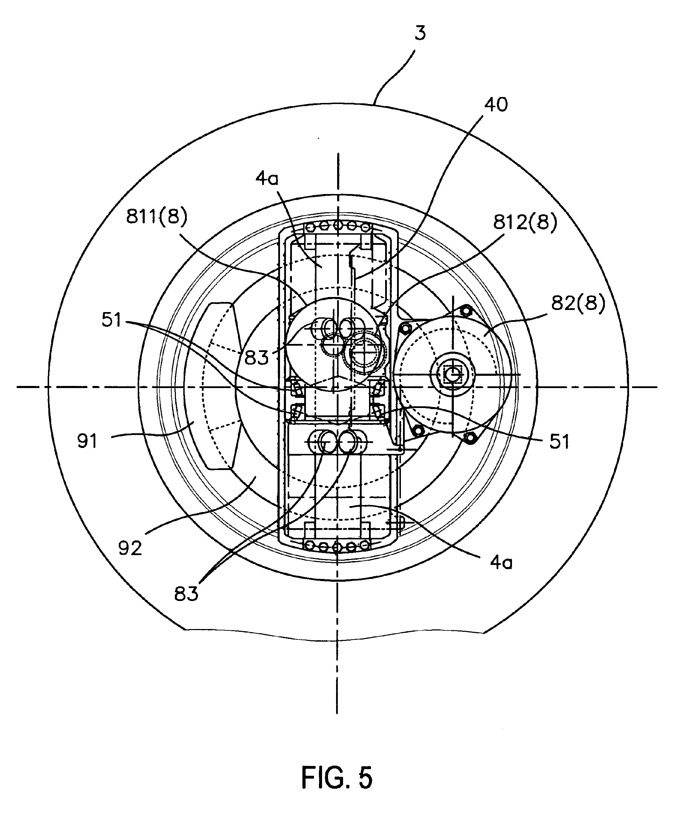

En revanche, pour chaque roue avant, l'élément suspendu 6 est lié à la glissière 5 correspondante en translation le long de la coulisse associée 4a, mais rendue mobile en rotation, grâce à des galets 51 (figures 5 et 7), autour de l'axe longitudinal du barreau 4a constituant cette coulisse afin de permettre les mouvements de braquage de cette roue avant.

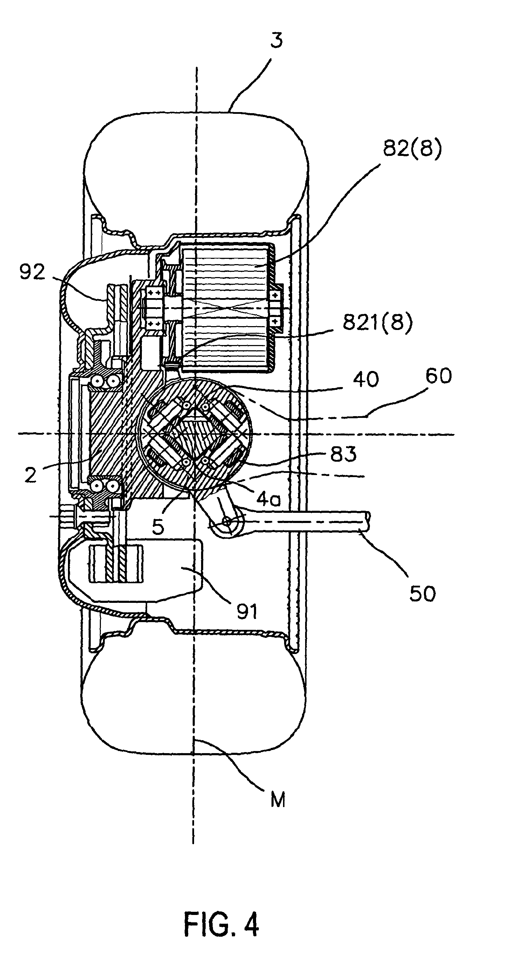

Comme le montre par ailleurs la figure 4, le barreau 4a associé à chaque roue avant 3 s'étend dans l'axe médian M de cette roue, et la glissière 5 est équipée d'une barre de direction articulée 50 qui permet de faire braquer la roue à volonté par rapport à l'élément suspendu 6.

Les moyens de suspension 8 ont quant à eux pour fonction de contrôler le coulissement de l'élément suspendu 6 le long de la coulisse 4a ou 4b, le barreau constituant cette coulisse étant à cette fin doté d'une crémaillère 40.

Comme le véhicule de la figure 1 est doté de deux essieux arrière, 121 et 122, il est possible de répartir la charge du véhicule sur ces deux essieux, et donc d'équiper chacun de ces essieux arrière de roues présentant une largeur inférieure à celle des roues 3 équipant l'essieu avant 11.

De plus, il est possible d'augmenter encore le volume utile du véhicule en prévoyant que le plan médian M de chaque roue 3 de chaque essieu arrière 121 et 122 occupe une position décalée vers l'extérieur du véhicule par rapport à la position occupée par le barreau 4b du porte-roue 2 portant cette roue 3.

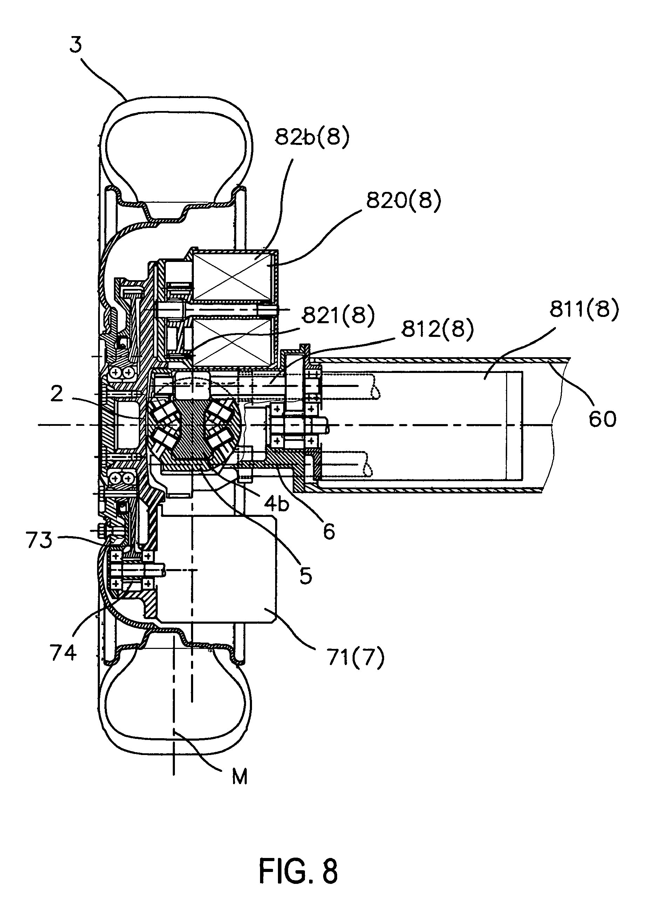

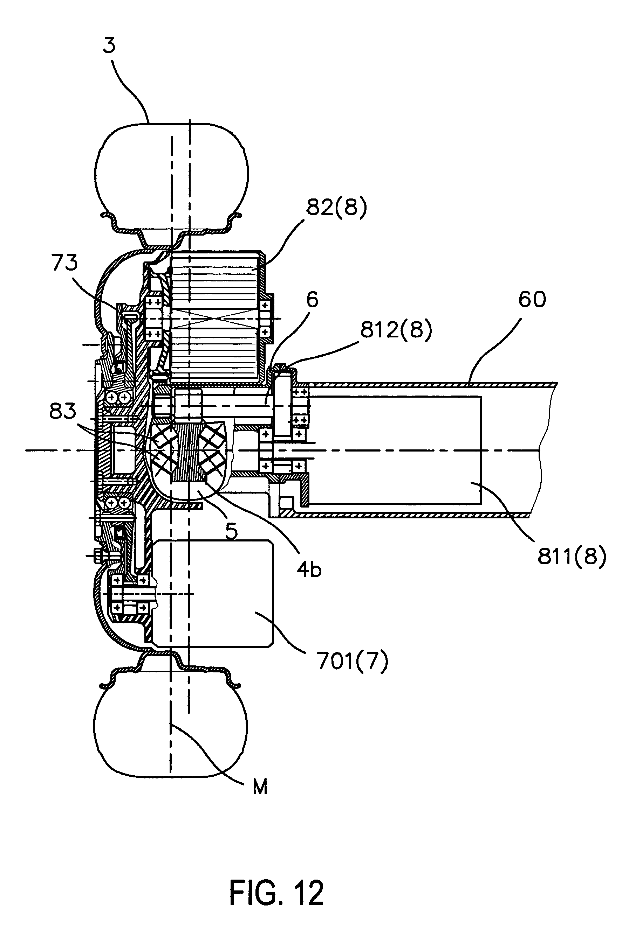

Comme le montrent les figures 8, 10 et 12, le barreau 4b de chaque porte-roue 2 de chacun des essieux arrière 121 et 122 présente en l'occurrence une section en forme de "I", dont la plus grande dimension est sensiblement parallèle au plan médian M de la roue 3 correspondante.

Comme indiqué précédemment, chaque roue avant 3 peut être motrice ou non, cette seconde possibilité étant illustrée aux figures 2 à 5.

Dans ce cas, la fonction de freinage est par exemple réalisée au moyen d'un frein à disque, comprenant un étrier 91 monté sur le porte-roue 2, et un disque 92 solidaire de la roue 3 en rotation autour de l'axe Y.

Dans le cas d'une roue avant motrice (figures 6 et 7), les moyens électriques d'entraînement 7 de cette roue comprennent par exemple une couronne d'entraînement 73, solidaire de cette roue en rotation autour de l'axe Y, et deux moteurs tels que 701 et 702 portés par le porte-roue 2, chacun de ces moteurs étant associé à un réducteur à deux étages de réduction, tel que 703 et 704, transmettant à la couronne 73 le couple fourni par le moteur correspondant.

Comme le montre la figure 6, chacun des moteurs tels que 701 peut aussi être équipé, de façon connue, d'un résolveur 75 disposé au bout de l'arbre de ce moteur et propre à délivrer un signal représentatif de la position angulaire de cet arbre et utilisé pour la commande de ce moteur.

Il convient de noter que l'expression de "moteur électrique" utilisé ici désigne toute machine propre à convertir de l'énergie électrique en un couple moteur, cette expression s'appliquant donc à toute machine également capable d'adopter une configuration dans laquelle elle assure la conversion inverse et dans laquelle elle permet donc de freiner le véhicule par récupération d'énergie électrique , comme décrit dans le document de brevet WO 2007/107570.

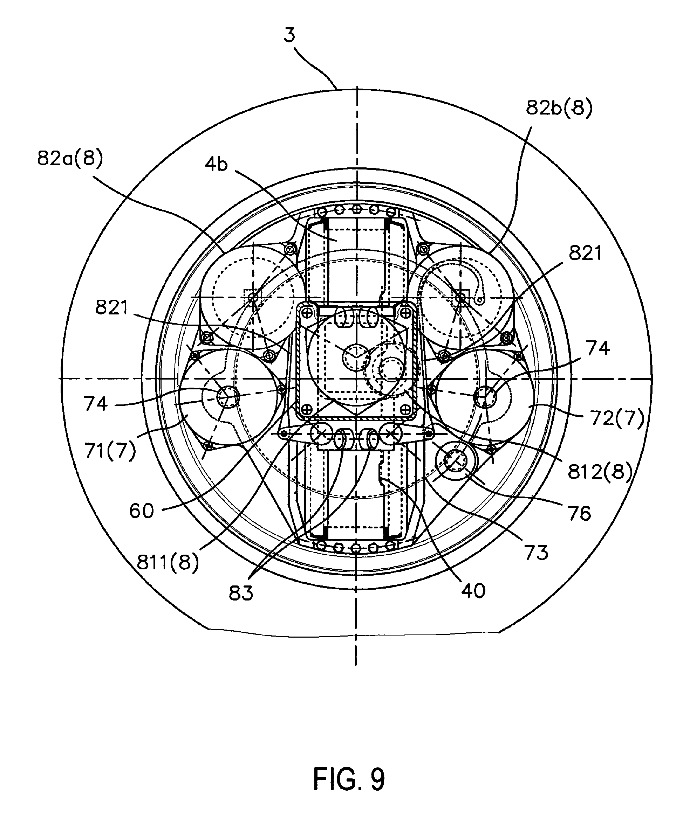

Chaque roue 3 de chacun des essieux arrière 121 et 122 (figures 9, 11, et 13) est de préférence mue par deux moteurs tels que 71, 72 ou 701, 702, dont l'arbre attaque directement la couronne d'entraînement 73 par l'intermédiaire d'un pignon moteur 74, c'est-à-dire sans l'aide d'un réducteur supplémentaire.

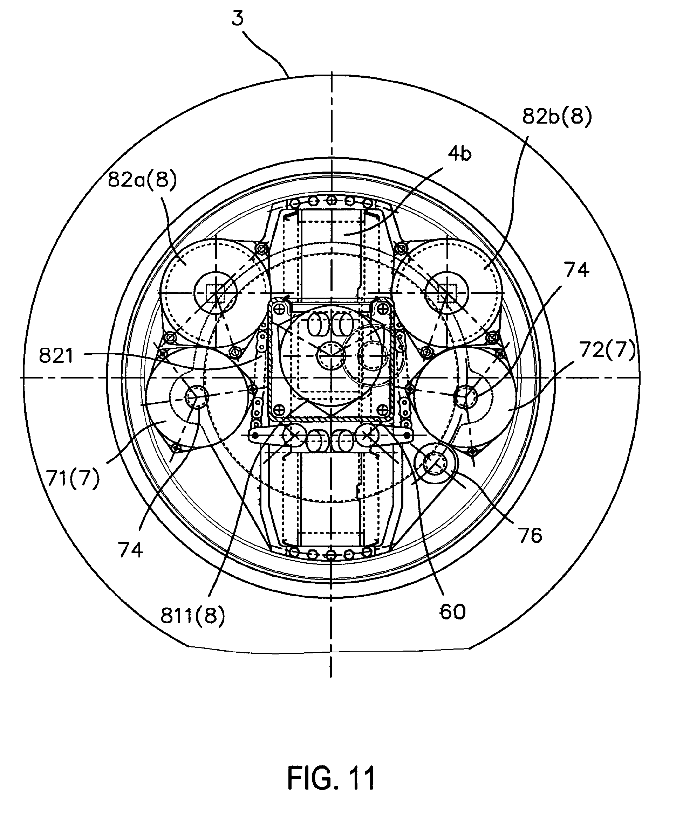

Dans une configuration avantageuse, illustrée aux figures 9 et 11, les moteurs 71 et 72 qui constituent les moyens électriques d'entraînement 7 de chaque roue arrière 3 sont disposés symétriquement de part et d'autre du barreau 4b.

Par ailleurs, comme le montrent également les figures 9 et 11, il peut être judicieux de remplacer le résolveur 75 illustré à la figure 6 et intégré à chaque moteur par un résolveur unique et autonome 76 engrenant avec la couronne d'entraînement 73 et disposé dans une position angulairement décalé par rapport à chaque moteur sur cette couronne.

Une telle disposition procure au moins l'avantage de réduire l'encombrement de chaque moteur suivant sa direction axiale et permet en outre, en exploitant le signal de sortie de ce résolveur unique 76 pour commander chaque moteur tel que 71 ou 72, de se dispenser de la nécessité d'utiliser autant de résolveurs que de moteurs.

Les moyens de suspension de chaque roue 3 comprennent typiquement des moyens électriques, conventionnellement dits "de premier type", et des moyens élastiques, conventionnellement dits "de second type".

Pour chacune des roues 3 de chacun des essieux avant et arrière 11, 121, et 122, les moyens de suspension du premier type comprennent en l'occurrence une machine électrique de suspension 811, la crémaillère 40 du barreau 4a ou 4b, et un réducteur 812 à deux étages de réduction interposé entre l'axe de la machine électrique 811 et la crémaillère 40.

Pour chaque roue 3, la machine électrique de suspension 811 et le réducteur 812 sont liés à la glissière 5 correspondant à cette roue.

Ainsi, dans le mode de réalisation illustré à la figure 2 et relatif à une roue avant, tout braquage de la roue 3 par rapport à la traverse 60 provoque la rotation du barreau 4a autour de son axe longitudinal, donc la rotation concomitante de la glissière 5 et celle de la machine électrique 811 et du réducteur 812 autour de ce même axe longitudinal du barreau.

La situation est la même dans le cas d'une roue 3 équipant l'un quelconque des essieux arrière 121 et 122 (figures 8 à 13), à ceci près que l'élément suspendu 6, qui est typiquement constitué par une extrémité de la traverse 60, est alors fixe par rapport à la glissière 5, de sorte que la machine électrique de suspension 811 et le réducteur 812 sont fixement liés à cet élément suspendu 6.

De façon connue en soi, une telle machine électrique de suspension 811 peut être utilisée pour transformer en puissance électrique les mouvements relatifs de l'élément suspendu 6 par rapport au barreau 4a ou 4b, cette puissance électrique étant elle-même dissipée ou récupérée pour provoquer un amortissement de ces mouvements relatifs.

Grâce à la présence du réducteur 812, qui adopte nécessairement une position décentrée à la fois par rapport à la machine électrique de suspension 811 et par rapport au barreau 4b, il est possible d'aligner cette machine et ce barreau sur la direction longitudinale de la traverse 60.

Ainsi, dans le cas où cette traverse 60 présente une section creuse, la machine électrique de suspension 811 peut être disposée dans cette traverse sur chaque essieu arrière, comme le montrent les figures 8, 10, et 12.

Les moyens de suspension 8 comprennent par ailleurs, pour chaque roue 3, un ou plusieurs organes de suspension élastiques, ou de deuxième type, tels que 82, 82a, ou 82b, chacun de ces organes étant porté par le porte-roue 2 et propre à appliquer entre ce porte-roue 2 et l'élément suspendu 6 une force élastique dépendant de la position de coulissement de l'élément suspendu 6 sur le barreau 4a ou 4b.

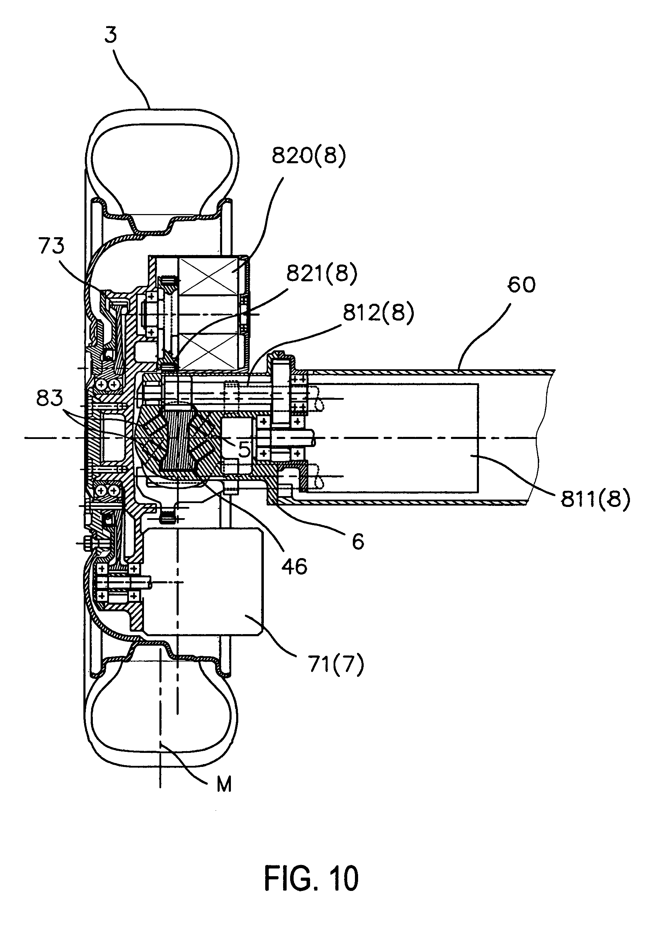

Chaque organe de suspension élastique tel que 82, 82a, et 82b comprend par exemple un ressort spiral 820 dont une extrémité est reliée à l'élément suspendu 6 au moyen d'un lien flexible 821 tel qu'une courroie (figures 4, 6, 8, 12), ou une chaîne (figure 10).

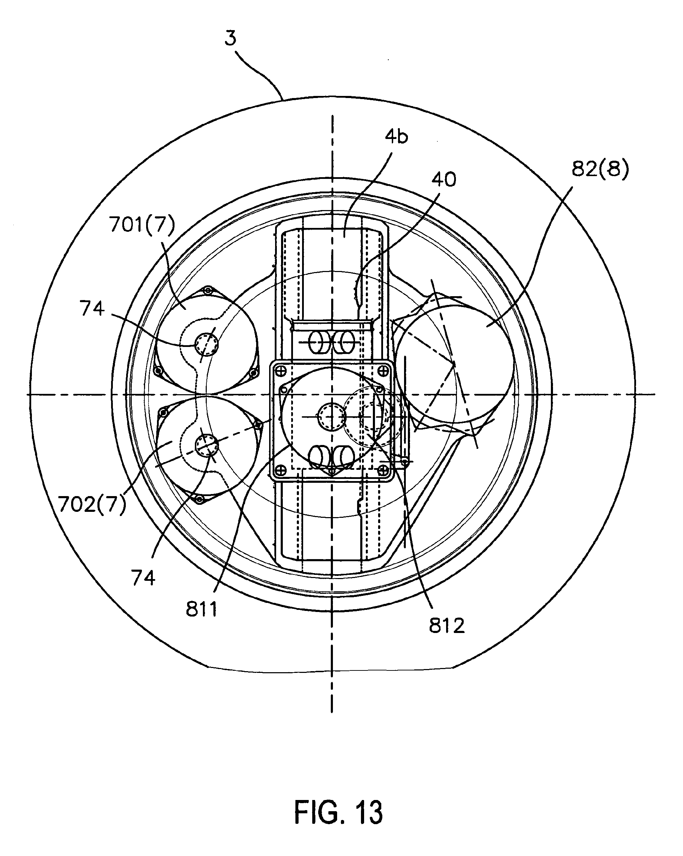

Alors qu'un seul organe de suspension élastique 82 peut suffire sur chaque roue de l'essieu avant 11 (figures 2 à 7), voire sur chaque roue d'essieu arrière (figure 13), il est plus judicieux d'équiper chaque roue d'essieu arrière de deux organes de suspension élastiques 82a et 82b.

Dans ce cas, illustré aux figures 9 et 11, ces organes de suspension élastiques 82a et 82b sont en l'occurrence disposés symétriquement de part et d'autre du barreau 4b, comme le sont de préférence les moteurs 71 et 72 qui constituent les moyens électriques d'entraînement 7 de cette roue 3.

## Revendications

1. Véhicule comprenant au moins un essieu avant (11) et un essieu arrière (121, 122), un premier au moins de ces essieux étant équipé, de chaque côté du véhicule, d'un porte-roue (2), d'une roue (3) portée à rotation autour de son axe (Y) par le porte-roue (2), d'une coulisse (4a, 4b) fixée au porte-roue (2), constituée d'un barreau unique, et disposée suivant une direction sensiblement verticale, d'une glissière (5) montée coulissante le long de la coulisse (4a, 4b), d'un élément suspendu (6) du véhicule, lié à la glissière (5) au moins en translation le long de la coulisse (4a, 4b), de moyens électriques d'entraînement (7) portés par le porte-roue (2) et entraînant sélectivement la roue (3) en rotation autour de son axe (Y), et de moyens de suspension (8) contrôlant le coulissement de l'élément suspendu (6) le long de la coulisse (4a, 4b), **caractérisé en ce que** le premier essieu (121) est un essieu arrière, **en ce que** ce véhicule comprend un deuxième essieu arrière (122), identique au premier (121), et **en ce que** le barreau (4b) de chaque porte-roue (2) de chaque essieu arrière (121, 122) présente une section en forme de "I", allongée suivant une direction sensiblement parallèle au plan médian (M) de la roue (3) correspondante.

2. Véhicule selon la revendication 1, **caractérisé en ce que** l'essieu avant (11) est équipé de roues (3) de largeur supérieure à celle des roues (3) équipant chaque essieu arrière (121, 122).

3. Véhicule selon l'une quelconque des revendications 1 et 2, **caractérisé en ce que** le plan médian (M) de chaque roue (3) de chaque essieu arrière (121, 122) occupe une position décalée vers l'extérieur du véhicule par rapport à la position occupée par le barreau (4b) du porte-roue (2) portant cette roue (3).

4. véhicule selon l'une quelconque des revendications précédentes, **caractérisé en ce que** les moyens de suspension (8) comprennent, au moins pour chaque roue (3) de chaque essieu arrière (121, 122), des moyens de suspension d'un premier type incluant une machine électrique de suspension (811) liée à l'élément suspendu (6) et associée à un réducteur (812) à deux étages de réduction.

5. Véhicule selon l'une quelconque des revendications précédentes combinée à la revendication 3, **caractérisé en ce que** les moyens de suspension (8) comprennent, pour chaque roue (3) de chacun des essieux avant et arrière (11, 121, 122), des moyens de suspension d'un premier type incluant une machine électrique de suspension (811) associée à un réducteur (812) à deux étages de réduction et liée à la glissière (5) correspondant à cette roue (3).

6. Véhicule selon l'une quelconque des revendications précédentes, **caractérisé en ce que** les moyens de suspension (8) comprennent, pour chaque roue (3) de chaque essieu arrière (121, 122), des moyens de suspension d'un premier type incluant une machine électrique de suspension (811) disposée dans une traverse (60) de cet essieu.

7. Véhicule selon l'une quelconque des revendications précédentes, **caractérisé en ce que** les moyens électriques d'entraînement (7) de chaque roue (3) de chaque essieu arrière (121, 122) comprennent deux moteurs (71, 72), disposés symétriquement de part et d'autre du barreau (4b).

8. Véhicule selon l'une quelconque des revendications précédentes, **caractérisé en ce que** les moyens de suspension (8) de chaque roue (3) comprennent au moins un organe de suspension (82, 82a, 82b) d'un deuxième type, porté par le porte-roue (2) et propre à appliquer entre le porte-roue (2) et l'élément suspendu (6) une force dépendant de la position de coulissement de l'élément suspendu (6) sur le barreau (4a, 4b).

9. Véhicule selon la revendication 8, **caractérisé en ce que** les moyens de suspension (8) de chaque roue (3) de chaque essieu arrière (121, 122) comprennent deux organes de suspension (82a, 82b) du deuxième type disposés symétriquement de part et d'autre du barreau (4b).

10. Véhicule selon l'une quelconque des revendications 8 et 9, **caractérisé en ce que** chaque organe de suspension (82, 82a, 82b) du deuxième type comprend un ressort spiral (820) dont une extrémité est reliée à l'élément suspendu (6), par exemple au moyen d'une courroie ou d'une chaîne (821).

11. Véhicule selon l'une quelconque des revendications précédentes combinée à la revendication 3, **caractérisé en ce que** les moyens électriques d'entraînement (7) de chaque roue (3) de l'essieu avant (11) comprennent deux moteurs (701, 702) dont chacun est associé à un réducteur (703, 704) à deux étages de réduction.

12. Véhicule suivant l'une quelconque des revendications précédentes, **caractérisé en ce que** les moyens électriques d'entraînement (7) de chaque roue (3) de l'un au moins des essieux comprennent un résolveur unique et autonome (76)

## Claims

1. Vehicle comprising at least one front axle (11) and one rear axle (121, 122), at least a first of these axles being equipped, on each side of the vehicle, with a wheel carrier (2), with a wheel (3) carried so that it rotates about its axis (Y) by the wheel carrier (2), with a slide (4a, 4b) fixed to the wheel carrier (2), the slide consisting of a single bar and being arranged in a substantially vertical direction, with a slider (5) mounted so that it can slide along the slide (4a, 4b), with a suspended element (6) of the vehicle, connected to the slider (5) at least in terms of translational movement along the slide (4a, 4b), with electric drive means (7) carried by the wheel carrier (2) and selectively driving the rotation of the wheel (3) about its axis (Y), and with suspension means (8) that control the sliding of the suspended element (6) along the slide (4a, 4b), **characterized in that** the first axle (121) is a rear axle, **in that** this vehicle comprises a second rear axle (122) identical to the first (121), and **in that** the bar (4b) of each wheel carrier (2) of each rear axle (121, 122) has an "I" shaped cross section elongated in a direction substantially parallel to the median plane (M) of the corresponding wheel (3).

2. Vehicle according to Claim 1, **characterized in that** the front axle (11) is equipped with wheels (3) of a width greater than that of the wheels (3) with which each rear axle (121, 122) is equipped.

3. Vehicle according to either one of Claims 1 and 2, **characterized in that** the median plane (M) of each wheel (3) of each rear axle (121, 122) occupies a position which is offset towards the outside of the vehicle in relation to the position occupied by the bar (4b) of the wheel carrier (2) that carries this wheel (3).

4. Vehicle according to any one of the preceding claims, **characterized in that** the suspension means (8) comprise, at least for each wheel (3) of each rear axle (121, 122), suspension means of a first type including an electric suspension machine (811) connected to the suspended element (6) and associated with a reduction gearbox (812) having two reduction stages.

5. Vehicle according to any one of the preceding claims combined with Claim 3, **characterized in that** the suspension means (8) comprise, for each wheel (3) of each of the front and rear axles (11, 121, 122), suspension means of a first type including an electric suspension machine (811) associated with a reduction gearbox (812) having two reduction stages and connected to the slider (5) corresponding to this wheel (3).

6. Vehicle according to any one of the preceding claims, **characterized in that** the suspension means (8) comprise, for each wheel (3) of each rear axle (121, 122), suspension means of a first type including an electric suspension machine (811) arranged in a cross member (60) of this axle.

7. Vehicle according to any one of the preceding claims, **characterized in that** the electric drive means (7) for each wheel (3) of each rear axle (121, 122) comprise two motors (71, 72) positioned symmetrically on each side of the bar (4b).

8. Vehicle according to any one of the preceding claims, **characterized in that** the suspension means (8) for each wheel (3) comprise at least one suspension member (82, 82a, 82b) of a second type, carried by the wheel carrier (2) and able to apply, between the wheel carrier (2) and the suspended element (6), a force that is dependant on the position of sliding of the suspended element (6) along the bar (4a, 4b).

9. Vehicle according to Claim 8, **characterized in that** the suspension means (8) for each wheel (3) of each rear axle (121, 122) comprise two suspension members (82a, 82b) of the second type positioned symmetrically on each side of the bar (4b).

10. Vehicle according to either one of Claims 8 and 9, **characterized in that** each suspension member (82, 82a, 82b) of the second type comprises a spiral spring (820) one end of which is connected to the suspended element (6) for example by means of a belt or of a chain (821).

11. Vehicle according to any one of the preceding claims combined with Claim 3, **characterized in that** the electric drive means (7) for each wheel (3) of the front axle (11) comprise two motors (701, 702) each of which is associated with a reduction gearbox (703, 704) having two reduction stages.

12. Vehicle according to any one of the preceding claims, **characterized in that** the electric drive means (7) for each wheel (3) of at least one of the axles comprise a single and autonomous resolver (76).

## Patentansprüche

1. Fahrzeug mit mindestens einer Vorderachse (11) und einer Hinterachse (121, 122), wobei mindestens eine erste dieser Achsen auf jeder Seite des Fahrzeugs mit einem Radhalter (2), einem durch den Radhalter (2) drehbar um seine Achse (Y) getragenen Rad (3), einer an dem Radhalter (2) befestigten Gleitbahn (4a, 4b), die aus einem einzigen Stab besteht und entlang einer im Wesentlichen vertikalen Richtung angeordnet ist, einer entlang der Gleitbahn (4a, 4b) verschiebbar angebrachten Gleitführung (5), einem aufgehängten Element (6) des Fahrzeugs, das mit der Gleitführung (5) zumindest für eine Translationsbewegung entlang der Gleitbahn (4a, 4b) verbunden ist, elektrischen Antriebsmitteln (7), die von dem Radhalter (2) getragen werden und das Rad (3) gezielt um seine Achse (Y) drehbar antreiben, und Aufhängungsmitteln (8), die das Verschieben des aufgehängten Elements (6) entlang der Gleitbahn (4a, 4b) beeinflussen, versehen ist, **dadurch gekennzeichnet, dass** die erste Achse (121) eine Hinterachse ist, dieses Fahrzeug eine zweite Hinterachse (122) aufweist, die mit der ersten (121) identisch ist, und der Stab (4b) jedes Radhalters (2) jeder Hinterachse (121, 122) ein in einer im Wesentlichen parallel zur Mittelebene (M) des entsprechenden Rads (3) verlaufenden Richtung langgestrecktes "I"-förmiges Profil aufweist.

2. Fahrzeug nach Anspruch 1, **dadurch gekennzeichnet, dass** die Vorderachse (11) mit Rädern (3) versehen ist, die größer sind als die Räder (3), mit denen jede Hinterachse (121, 122) versehen ist.

3. Fahrzeug nach einem der Ansprüche 1 und 2, **dadurch gekennzeichnet, dass** die Mittelebene (M) jedes Rads (3) jeder Hinterachse (121, 122) eine Position einnimmt, die bezüglich der durch den Stab (4b) des dieses Rad (3) tragenden Radhalters (2) eingenommenen Position nach außen des Fahrzeugs versetzt ist.

4. Fahrzeug nach einem der vorhergehenden Ansprüche, **dadurch gekennzeichnet, dass** die Aufhängungsmittel (8) mindestens für jedes Rad (3) jeder Hinterachse (121, 122) Aufhängungsmittel einer ersten Art umfassen, die eine elektrische Federungsmaschine (811) enthalten, die mit dem aufgehängten Element (6) verbunden und einem Untersetzungsgetriebe (812) mit zwei Untersetzungsstufen zugeordnet ist.

5. Fahrzeug nach einem der vorhergehenden Ansprüche in Kombination mit Anspruch 3, **dadurch gekennzeichnet, dass** die Aufhängungsmittel (8) für jedes Rad (3) jeder Vorder- und Hinterachse (11, 121, 122) Aufhängungsmittel einer ersten Art umfassen, die eine elektrische Federungsmaschine (811) enthalten, die einem Untersetzungsgetriebe (812) mit zwei Untersetzungsstufen zugeordnet und mit der diesem Rad (3) entsprechenden Gleitführung (5) verbunden ist.

6. Fahrzeug nach einem der vorhergehenden Ansprüche, **dadurch gekennzeichnet, dass** die Aufhängungsmittel (8) für jedes Rad (3) jeder Hinterachse (121, 122) Aufhängungsmittel einer ersten Art umfassen, die eine elektrische Federungsmaschine (811) enthalten, die in einem Querträger (60) dieser Achse angeordnet ist.

7. Fahrzeug nach einem der vorhergehenden Ansprüche, **dadurch gekennzeichnet, dass** die elektrischen Antriebsmittel (7) jedes Rads (3) jeder Hinterachse (121, 122) zwei Motoren (71, 72) umfassen, die symmetrisch auf beiden Seiten des Stabs (4b) angeordnet sind.

8. Fahrzeug nach einem der vorhergehenden Ansprüche, **dadurch gekennzeichnet, dass** die Aufhängungsmittel (8) jedes Rads (3) mindestens ein Aufhängungsglied (82, 82a, 82b) einer zweiten Art umfassen, das von dem Radhalter (2) getragen wird und zwischen dem Radhalter (2) und dem aufgehängten Element (6) eine Kraft anlegen kann, die von der Gleitposition des aufgehängten Elements (6) auf dem Stab (4a, 4b) abhängig ist.

9. Fahrzeug nach Anspruch 8, **dadurch gekennzeichnet, dass** die Aufhängungsmittel (8) jedes Rads (3) jeder Hinterachse (121, 122) zwei Aufhängungsglieder (82a, 82b) der zweiten Art umfassen, die symmetrisch auf beiden Seiten des Stabs (4b) angeordnet sind.

10. Fahrzeug nach einem der Ansprüche 8 und 9, **dadurch gekennzeichnet, dass** jedes Aufhängungsglied (82, 82a, 82b) der zweiten Art eine Spiralfeder (820) umfasst, deren eines Ende zum Beispiel mittels eines Riemens oder einer Kette (821) mit dem aufgehängten Element (6) verbunden ist.

11. Fahrzeug nach einem der vorhergehenden Ansprüche in Kombination mit Anspruch 3, **dadurch gekennzeichnet, dass** die elektrischen Antriebsmittel (7) jedes Rads (3) der Vorderachse (11) zwei Motoren (701, 702) umfassen, von denen jeder einem Untersetzungsgetriebe (703, 704) mit zwei Untersetzungsstufen zugeordnet ist.

12. Fahrzeug nach einem der vorhergehenden Ansprüche, **dadurch gekennzeichnet, dass** die elektrischen Antriebsmittel (7) jedes Rads (3) mindestens einer der Achsen einen einzigen und unabhängigen Resolver (76) umfassen.
